# EUROPEAN PATENT APPLICATION

(11) **EP 4 835 691 A1**
(43) Date of publication of application: **04.11.2026**
(21) Application number: 25173077.6
(22) Date of filing: 29.04.2025
(51) Int. Cl.: G06F 16/9032

(54) **METHOD FOR CONTEXT EXTRACTION DEFENSE IN A RETRIEVAL-BASED IN-CONTEXT LEARNING ENHANCED LARGE LANGUAGE MODEL**

(71) Applicant: Robert Bosch GmbH, 70442 Stuttgart (DE)
(72) Inventor: Nicolae, Maria Irina, 70197 Stuttgart (DE); Eisele, Max Camillo, 71640 Ludwigsburg (DE); Zhuang, Zhixiong, 71272 Renningen (DE)

(57) **Abstract**

A computer-implemented method for defending example extraction in a retrieval-based in-context learning enhanced large language model comprises: computing for an original example embedding of an example stored in an example database an optimized proxy example embedding by: minimizing a cross-entropy loss between a response generated by the large language model on the basis of an original example embedding to a predetermined set of queries and a response generated by the large language model on the basis of a proxy example embedding to said predetermined set of queries, and minimizing a cross-entropy loss between a response generated by the large language model on the basis of a proxy example embedding to an attack query and a fixed predetermined response; and generating a response to an input query by the large language model on the basis of the optimized proxy example embedding.

## Description

The present disclosure relates to a method for context extraction defense in a retrieval-based in-context learning enhanced large language model.

Retrieval-based in-context learning (RetICL) is a method that enhances large language models (LLMs) by dynamically incorporating relevant examples retrieved from external datastores. During interactions, RetICL systems integrate two essential components: user queries and the retrieved examples, which serve as demonstrations to enrich contextual understanding and significantly improve the accuracy of responses.

The present disclosure addresses scenarios where retrieved examples should be protected and remain inaccessible to end users of the RetICL system. This is particularly critical when such systems are deployed as external services by private or corporate entities. The RetICL provider may utilize proprietary, privacy-sensitive, or confidential data to improve model performance. Unauthorized access to these retrieved examples could allow adversaries to reconstruct the underlying dataset, exposing valuable intellectual property or confidential domain knowledge.

In light of the foregoing, a resilient defense mechanism is needed to safeguard the confidentiality of training data while maintaining response effectiveness.

According to a first aspect of the present disclosure, this goal is achieved by means of a computer-implemented method for defending example extraction in a retrieval-based in-context learning enhanced large language model, the method comprising:
- computing for an original example embedding, e.g. of an example stored in an example database, an optimized proxy example embedding by:
   - minimizing a cross-entropy loss between a response generated by the large language model on the basis of an original example embedding to a predetermined set of queries and a response generated by the large language model on the basis of a proxy example embedding to said predetermined set of queries, and
   - minimizing a cross-entropy loss between a response generated by the large language model on the basis of a proxy example embedding to an attack query and a fixed predetermined response;
      and
- generating a response to an input query by the large language model on the basis of the optimized proxy example embedding.

By minimizing the cross-entropy loss between a response generated by the large language model on the basis of an original example embedding to a predetermined set of queries and a response generated by the large language model on the basis of a proxy example embedding to said predetermined set of queries, the utility of the retrieval-based in-context learning (RetICL) enhanced large language model (LLM) is preserved. By minimizing a cross-entropy loss between a response generated by the large language model on the basis of a proxy example embedding to an attack query and a fixed predetermined response, original example extraction is prevented.

The queries of the predetermined set of queries can be synthesized by means of the large language model using original examples as a reference. As the attack query, a proxy query can be used. For example, it may only be used in the optimization procedure and may act as a lower bound for potential attack queries. The fixed predetermined response may be specified to be semantically distinct from original examples.

The optimized proxy example embedding may be computed by solving the following optimization problem: ${arg min}_{{{ϕ}^{˜}}_{e}} \left[\frac{1}{\left|ℚ\right|}{\sum }_{q ∈ ℚ} L \left(f\left({ϕ}_{R \left(q\right)}, {ϕ}_{q}\right),f\left({{ϕ}^{˜}}_{e}, {ϕ}_{q}\right)\right) + L \left(f\left({{ϕ}^{˜}}_{e}, {ϕ}_{{q}_{a}}\right),{e}^{˜}\right)\right] ,$ wherein 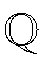 denotes the predetermined set of queries, *q* a query of the set of queries 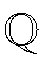 , *ϕ_{q}* an embedding of the query *q, ϕ*_{*R*(*q*)} an embedding of one or more original examples retrieved in response to the input query *q, ϕ̃ₑ* a proxy example embedding, *ϕ_{qₐ}* an attack query embedding, *ẽ* the fixed predetermined response, and 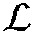 the cross-entropy loss.

The optimized proxy example embedding obtained by solving the above optimization problem can be used as a single global proxy example embedding which may be combined with respective embeddings of each query.

For an efficient handling of complex or heterogeneous patterns more than one proxy example embeddings might be necessary. To address this aspect, the method may further comprise: learning a set of *M* proxy example embeddings ${\left\{{{ϕ}^{˜}}_{{e}_{m}}\right\}}_{m = 1}^{M}$ along with a coefficient matrix ${W}_{im} ∈ {ℝ}^{N \times M}$, with *N* being a number of examples stored in the database or the number of all examples stored in the database, ${\sum }_{m = 1}^{M} {W}_{im} = 1$, and *Wᵢₘ* ≥ 0. For example, the learning can be carried by minimizing the above expression in which the proxy example embedding *ϕ̃ₑ* is replaced by a convex combination of *M* proxy example embeddings with the coefficients of the coefficient matrix *Wᵢₘ* as coefficients.

The proxy example embeddings for each example stored in the dataset can then be expressed in terms of the learned *M* proxy example embeddings as follows: ${{ϕ}^{˜}}_{e}^{\left(i\right)} = {\sum }_{m = 1}^{M} {W}_{im} {{ϕ}^{˜}}_{{e}_{m}} ,$ wherein ${{ϕ}^{˜}}_{e}^{\left(i\right)}$ denotes a proxy example embedding of an *i*-th example among the *N* examples, *ϕ̃_{eₘ}* denotes a learned proxy example embedding of the learned set ${\left\{{{ϕ}^{˜}}_{{e}_{m}}\right\}}_{m = 1}^{M}$ of proxy example embeddings, and ${W}_{im} ∈ {ℝ}^{N \times M}$ denote coefficients of the learned coefficient matrix.

If in response to an input query, *k* relevant examples are retrieved, a proxy example embedding can be determined by concatenating the respective proxy example embeddings corresponding to the *k* examples as follows: ${{ϕ}^{˜}}_{e} : = {{ϕ}^{˜}}_{e}^{\left(1\right)} \left‖{{ϕ}^{˜}}_{e}^{\left(2\right)}\right‖ ⋯ \left‖{{ϕ}^{˜}}_{e}^{\left(k\right)}\right. ,$ wherein *ϕ̃ₑ* denotes the resulting proxy example embedding, ${{ϕ}^{˜}}_{e}^{\left(1\right)} , … , {{ϕ}^{˜}}_{e}^{\left(k\right)}$ denote the proxy example embeddings of the retrieved *k* examples, and symbol ∥ denotes the concatenation operation. In this way, rich structural information can be preserved.

Alternatively, a proxy example can be determined by aggregating the proxy example embeddings of the retrieved k examples as follows: ${{ϕ}^{˜}}_{e} = \frac{1}{k} {\sum }_{i = 1}^{k} {{ϕ}^{˜}}_{e}^{\left(i\right)} .$

In this case, the learning of the set ${\left\{{{ϕ}^{˜}}_{{e}_{m}}\right\}}_{m = 1}^{M}$ of proxy example embeddings and of the coefficient matrix ${W}_{im} ∈ {ℝ}^{N \times M}$ can be carried out by solving the following optimization problem: $\begin{matrix}{arg min}_{{\left\{{{ϕ}^{˜}}_{{e}_{m}}\right\}}_{m = 1}^{M} , W} \frac{1}{\left|ℚ\right|} {\sum }_{q ∈ ℚ} L \left(f\left({ϕ}_{R \left(q\right)}, {ϕ}_{q}\right),f\left(\frac{1}{k}{\sum }_{i = 1}^{k} {\sum }_{m = 1}^{M} {W}_{im} {{ϕ}^{˜}}_{{e}_{m}} , {ϕ}_{q}\right)\right) \\ + {\sum }_{m = 1}^{M} L \left(f\left({{ϕ}^{˜}}_{{e}_{m}}, {ϕ}_{{q}_{a}}\right),{e}^{˜}\right) .\end{matrix}$

In a second aspect of the present disclosure, a data processing apparatus is provided comprising means configured to perform a method described above.

In a third aspect of the present disclosure, a computer program is provided comprising instructions which, when the program is executed by a computer, cause the computer to perform a previously described method.

In a fourth aspect of the present disclosure, a computer-readable storage medium is provided comprising instructions which, when executed by a computer, cause the computer to carry out a previously described method.

The present disclosure will be described in detail in the following with reference to the accompanying drawings. In the drawings:
Figure 1 is a schematic diagram showing an example of a RetICL enhanced LLM.
Figure 2 is a flow diagram of an exemplary method according to the present disclosure.
Figure 3 is a schematic drawing of an exemplary data processing apparatus according to the present disclosure.

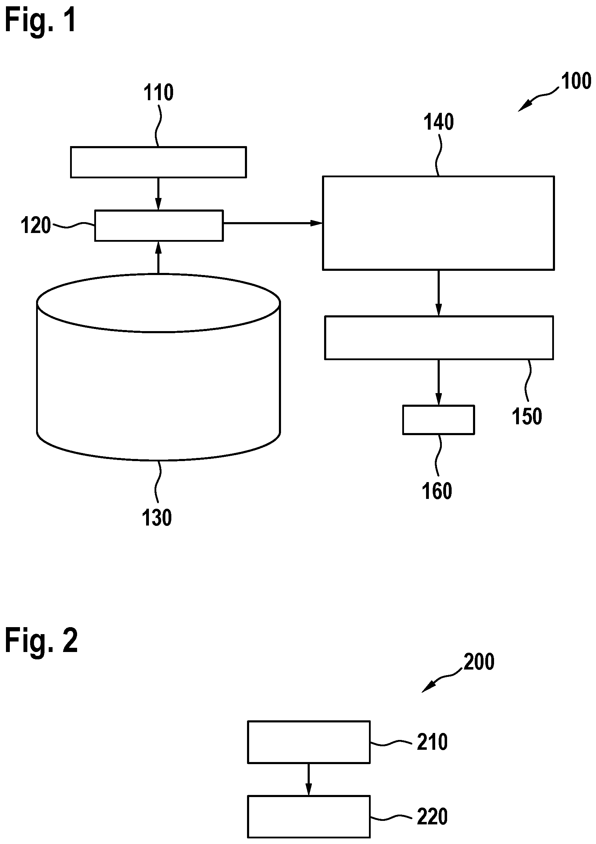

Figure 1 is a schematic diagram showing an example of a large language model (LLM) enhanced by retrieval-based in-context learning (RetICL) which will be subsequently referred to as a RetICL system 100.

Retrieval-based in-context learning is a method that enhances large language models by dynamically incorporating relevant examples retrieved from external datastores. Figure 1 illustrates an example of a workflow of a RetICL system 100. In response to a query input by a user 110 into a retriever 120, the retriever 120 selects relevant examples from training data stored in a database 130 based on a predefined similarity metric which are combined with the input query 110 to synthesize a prompt 140 and, thus utilized as contextual demonstrations for the large language model 150 which is tasked with formulating a response 160. The LLM 150 leverages these retrieved examples to interpret and respond precisely and contextually to the user input, significantly enhancing the quality and accuracy of its outputs.

The user's query might be, for example, a review such as "Tasty food." Responsive to this review, the LLM 150 may be tasked with formulating a response reflecting a sentiment associated with the input review. The retrieved examples might include a plurality of reviews such as "Very tasty!", "Truly awful!", "Delicious!", and "I like it!" and of corresponding sentiments such as "Positive", "Negative", "Positive", and "Positive". These examples are combined with the input review "Tasty food!" and the LLM 150 is tasked with formulating a response reflecting whether the review is "Positive" or "Negative".

RetICL extraction attacks target RetICL-enabled systems to infer, reconstruct, or extract proprietary training examples used for retrieval augmentation. Attackers can craft iterative or adversarial queries to systematically reveal retrieved demonstrations, which may include sensitive data, proprietary datasets, or curated domain knowledge. Successful attacks compromise intellectual property, enable data leakage, and facilitate unauthorized replication of specialized training data.

A method of defending attacks of this kind will be explained in the following on the basis of an exemplary RetICL system.

The operation of RetICL systems in general employs the embedding of text, prompts, and queries into a latent space. A tokenization and embedding function is denoted here by *h*(*·*)*.* This function maps a text *X* to its embedding *h*(*X*) *=* ${ϕ}_{X} ∈ {ℝ}^{e \times {n}_{X}}$, where *n_{X}* is the token length and *e* is the embedding size. For a given user query *q*, a retrieval function *R*(q) returns the top-*k* relevant examples *e*_{1*,...,k*} (*k* being an integer) from a training dataset $D = {\left\{{e}_{i}\right\}}_{i = 1}^{N}$ based on similarity metrics, where *N* is the dataset size. Each example *e* is a pair of question and answer (*q, a*)*.* The LLM, parameterized by *θ*, then produces an answer *â* according to *â* = *f_{θ}*(*ϕ*_{*R*(*q*)}*, ϕ_{q}*) *= f*(*ϕ*_{*R*(*q*)}*, ϕ_{q}*), with the parameters *θ* ignored for brevity as they are fixed. *ϕ*_{*R*(*q*)} and *ϕ_{q}* are the embeddings of the retrieved examples and the query, respectively.

In such a setup, the attacker's objective is to extract the training examples from dataset 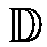 or semantically equivalent information by submitting carefully designed attack queries *qₐ* to the RetICL system. The attacker aims to maximize metrics such as n-gram overlap or embedding similarity between the model's output *âₐ* and the original training examples. The attacker operates without access to the full training dataset 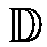 , the LLM's internal parameters *θ*, the LLM's functions *f*(*·*), and the embedding function *h*(·); however, the attacker is able to query the system and observe its outputs.

The defender's objective is to ensure that the outputs provided in response to user queries retain the desired functionality while preventing any attacker from reconstructing the training examples. The defender is assumed to have access to the full training dataset 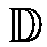 , the LLM's function *f_{θ}*(*·*), the embedding function *h*(*·*), and the retrieval function *R*(·). The defender, however, cannot distinguish between benign and malicious queries.

According to the present disclosure, a method for example extraction defense in a RetICL enhanced LLM is provided that replaces retrieved examples (or example embeddings) with proxy examples (or proxy example embeddings), preserving utility while preventing extraction attacks.

Figure 2 is a flow diagram of an exemplary computer-implemented method 200 for defending example extraction in a retrieval-based in-context learning enhanced large language model, wherein the method 200 comprises:
- computing 210 for an original example embedding, e.g. of an example stored in an example database, an optimized proxy example embedding by:
   - minimizing a cross-entropy loss between a response generated by the large language model on the basis of an original example embedding to a predetermined set of queries and a response generated by the large language model on the basis of a proxy example embedding to said predetermined set of queries, and
   - minimizing a cross-entropy loss between a response generated by the large language model on the basis of a proxy example embedding to an attack query and a fixed predetermined response;
      and
- generating 220 a response to an input query by the large language model 370 on the basis of the optimized proxy example embedding.

The defense method will be explained in detail in the following in a RetICL setting in which a large language model answers a user query *q* by retrieving a set of examples *R*(*q*) from a training dataset 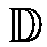 . In standard frameworks according to the prior art, the retrieved examples are directly used by the LLM, which raises the risk of training data extraction. To mitigate this, the original retrieved examples are replaced with a proxy that preserves the intended utility while preventing extraction.

The retrieved examples (example embeddings) might be replaced with a global proxy (global proxy embedding), i.e. the defender seeks to learn a single proxy example embedding *ϕ̃ₑ* that, when combined with the query embedding *ϕ_{q}*, approximates the output of the retrieval-based system, i.e. of the RetICL enhanced LLM. The defense objective is two-fold: (i) to preserve utility, the discrepancy between the LLM's output using the original retrieved examples *f*(*ϕ*_{*R*(*q*)},*ϕ_{q}*) and that using the proxy *f*(*ϕ̃ₑ, ϕ_{q}*) is minimized; and (ii) to prevent extraction, under an adversarial attack query *qₐ*, the output *f*(*ϕ̃ₑ, ϕ_{qₐ}*) is enforced to deviate from any direct reconstruction of training examples, as measured against a predefined prompt *ẽ*. With cross-entropy as the loss function 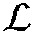 , this objective can be formalized as: ${arg min}_{{{ϕ}^{˜}}_{e}} \left[{{\frac{1}{\left|ℚ\right|} {\sum }_{q ∈ ℚ} L \left(f\left({ϕ}_{R \left(q\right)}, {ϕ}_{q}\right),f\left({{ϕ}^{˜}}_{e}, {ϕ}_{q}\right)\right)}^{︷}}^{\left(1\right) Utility preservation}+{{L \left(f\left({{ϕ}^{˜}}_{e}, {ϕ}_{{q}_{a}}\right),{e}^{˜}\right)}^{︷}}^{\left(2\right) Extraction prevention}\right] .$

Here, Q represents the set of questions/queries in the training data, as the defender might not have access to user queries, q is a question of the set of questions 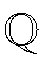 , *ϕ_{q}* is the query embedding, *ϕ*_{*R*(*q*)} is the embedding of the response to the query *q* (i.e. the embedding of the retrieved example or examples), *ϕ̃ₑ* is the proxy embedding, and *ẽ* denotes the predefined prompt, i.e. a fixed predetermined response.

A single global proxy might be insufficient because the queries might be too complex or contain heterogeneous patterns that cannot be efficiently captured by one example as the context. To overcome this limitation, the approach can be extended by learning a set of *M* example proxies ${\left\{{{ϕ}^{˜}}_{{e}_{m}}\right\}}_{m = 1}^{M}$ along with a corresponding coefficient matrix $W ∈ {ℝ}^{N \times M}$ (*N, M* being integers). In this way, each example in the dataset $D = {\left\{{e}_{i}\right\}}_{i = 1}^{N}$ can be replaced with a convex combination of the *M* example proxies ${\sum }_{m = 1}^{M} {W}_{im} {{ϕ}^{˜}}_{{e}_{m}}$, where *Wᵢₘ* represents the weight of proxy *ϕ̃_{eₘ}* in approximating *ϕ_{eᵢ}*, with ${\sum }_{m = 1}^{M} {W}_{im} = 1 {W}_{im} \geq 0$.

In this way, for each query q, the proxies of its *k* retrieved examples can be aggregated to form a new retrieved representation, *ϕ̃*_{*R*(*q*)}, as a proxy for *ϕ*_{*R*(*q*)}: ${{ϕ}^{˜}}_{R \left(q\right)} : = \frac{1}{k} {\sum }_{i = 1}^{k} {\sum }_{m = 1}^{M} {W}_{im} {{ϕ}^{˜}}_{{e}_{m}} .$

Alternatively, the retrieved proxies can also be concatenated to preserve richer structural information: ${{ϕ}^{˜}}_{R \left(q\right)} : = {{ϕ}^{˜}}_{R \left(q\right)}^{\left(1\right)} \left‖{{ϕ}^{˜}}_{R \left(q\right)}^{\left(2\right)}\right‖ ⋯ \left‖{{ϕ}^{˜}}_{R \left(q\right)}^{\left(k\right)}\right. ,$ where each ${{ϕ}^{˜}}_{R \left(q\right)}^{\left(i\right)} = {\sum }_{m = 1}^{M} {W}_{im} {{ϕ}^{˜}}_{{e}_{m}}$ represents the proxy embedding for the *i*-th retrieved example, and symbol ∥ denotes the concatenation operation.

The defense objective now becomes to preserve the utility of the retrieval-based system by ensuring that the output using the proxy *f*(*ϕ̃*_{*R*(*q*)}, *ϕ_{q}*) closely matches the output obtained from the original retrieved examples. At the same time, extraction prevention is enforced by requiring that for an attack query *qₐ* the outputs of each individual example proxy are steered toward a predetermined answer *ẽ*. Formally, if the proxies are aggregated, then the optimization objective is: $\begin{matrix}{arg min}_{{\left\{{{ϕ}^{˜}}_{{e}_{m}}\right\}}_{m = 1}^{M} , W} \frac{1}{\left|ℚ\right|} {\sum }_{q ∈ ℚ} L \left(f\left({ϕ}_{R \left(q\right)}, {ϕ}_{q}\right),f\left(\frac{1}{k}{\sum }_{i = 1}^{k} {\sum }_{m = 1}^{M} {W}_{im} {{ϕ}^{˜}}_{{e}_{m}} , {ϕ}_{q}\right)\right) \\ + {\sum }_{m = 1}^{M} L \left(f\left({{ϕ}^{˜}}_{{e}_{m}}, {ϕ}_{{q}_{a}}\right),{e}^{˜}\right) .\end{matrix}$

In this extended formulation, the use of *M* shared example proxies allows each proxy to be exposed to a broad range of training examples, thereby learning robust and generalizable representations. The coefficient matrix *W* further ensures that the local characteristics of each retrieved example are captured. This method achieves a balance between utility preservation and extraction prevention in the RetICL setting.

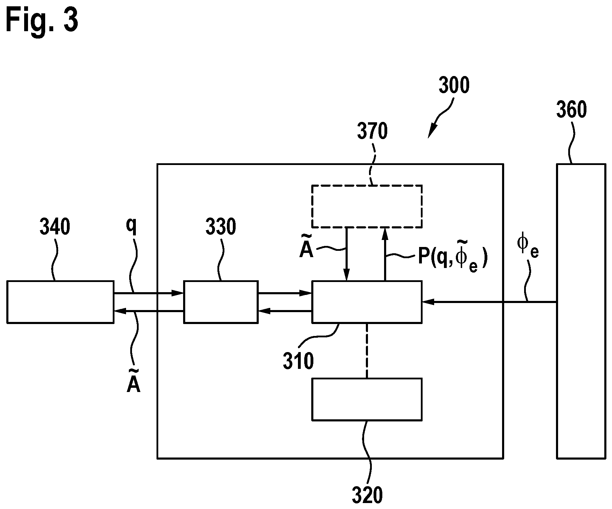

The method according to the present disclosure can be implemented by a data processing apparatus 300 schematically shown in Figure 3. The data processing apparatus 300 may include a processing device 310 and a computer-readable storage medium 320 connected to the processing device 310. The processing device 310 may include or may be configured as one or more general-purpose processing devices such as a processor, or as one or more special-purpose processing devices such as an application specific integrated circuit (ASIC), a field programmable gate array (FPGA) and the like. The computer-readable storage medium 320 may include or may be configured as a read-only memory (ROM), a random-access memory (RAM) and the like.

A computer program may be stored in the computer-readable storage medium 320 including instructions that can be executed by the processing device 310, i.e. a computer. The instructions included in the computer program may cause the processing device 310 to carry out the above-described method.

The data processing apparatus 300 may include an input/output unit 330 configured to receive and process a query q input by a user 340 and to forward the processed query q to the processing device 310. Upon receipt of the query, the processing device 310 may retrieve relevant original examples from an example database 360 storing a set of examples.

The examples may be stored in an embedded form in the database 360 as original example embeddings *ϕₑ*. In such a case, the processing device 310 may be configured to retrieve relevant original example embeddings *ϕₑ* from the database 360 and to calculate the optimized example embeddings *ϕ̃ₑ* as described above.

Alternatively, the database 360 may store original examples as raw data. In such a case, the processing device 310 may be configured to first carry out an embedding of the raw data into a latent space using an embedding function *h*(·) and to then calculate the optimized example embeddings *ϕ̃ₑ* as described above.

The processing device 310 may then synthesize a coherent prompt P on the basis of the input query *q* and the optimized example embeddings *ϕ̃ₑ*, and input this prompt *P* into a large language model 370. The large language model 370 may be implemented by the processing device 310 by carrying out the instructions stored in the storage medium 320. The large language model 370 may be configured to generate a secured answer *Ã* to the input query *q* on the basis of the optimized proxy example embeddings *ϕ̃ₑ.* The secured answer *Ã* may then be output to the user 340 via the input/output unit 330.

## Claims

1. A computer-implemented method (200) for defending example extraction in a retrieval-based in-context learning enhanced large language model (370), the method (200) comprising:
- computing (210) for an original example embedding (*ϕₑ*) an optimized proxy example embedding (*ϕ̃ₑ*) by:
- minimizing a cross-entropy loss between a response generated by the large language model (370) on the basis of an original example embedding to a predetermined set of queries and a response generated by the large language model (370) on the basis of a proxy example embedding (*ϕ̃ₑ*) to said predetermined set of queries, and
- minimizing a cross-entropy loss between a response generated by the large language model (370) on the basis of a proxy example embedding (*ϕ̃ₑ*) to an attack query and a fixed predetermined response;
and
- generating (220) a response to an input query by the large language model (370) on the basis of the optimized proxy example embedding (*ϕ̃ₑ*).

2. The method (200) of claim 1, wherein the optimized proxy example embedding (*ϕ̃ₑ*) is computed by solving the following optimization problem: ${arg min}_{{{ϕ}^{˜}}_{e}} \left[\frac{1}{\left|ℚ\right|}{\sum }_{q ∈ ℚ} L \left(f\left({ϕ}_{R \left(q\right)}, {ϕ}_{q}\right),f\left({{ϕ}^{˜}}_{e}, {ϕ}_{q}\right)\right)+L\left(f\left({{ϕ}^{˜}}_{e}, {ϕ}_{{q}_{a}}\right),{e}^{˜}\right)\right] ,$ wherein Q denotes the predetermined set of queries, q a query of the set of queries 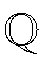 , *ϕ_{q}* an embedding of the query *q, ϕ*_{*R*(*q*)} an embedding of the original example, *ϕ̃ₑ* a proxy example embedding, *ϕ_{qₐ}* an attack query embedding, *ẽ* the fixed predetermined response, and 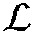 the cross-entropy loss.

3. The method (200) of claim 1 or 2, comprising learning a set of *M* proxy example embeddings ${\left\{{{ϕ}^{˜}}_{{e}_{m}}\right\}}_{m = 1}^{M}$ along with a coefficient matrix ${W}_{im} ∈ {ℝ}^{N \times M}$, with *N* being a number of examples stored in the database, ${\sum }_{m = 1}^{M} {W}_{im} = 1$, and *Wᵢₘ* ≥ 0.

4. The method (200) of claim 3, wherein the optimized proxy example embedding ${{ϕ}^{˜}}_{e}^{\left(i\right)}$ of an *i*-th example among the *N* examples is determined as follows: ${{ϕ}^{˜}}_{e}^{\left(i\right)} = {\sum }_{m = 1}^{M} {W}_{im} {{ϕ}^{˜}}_{{e}_{m}} ,$ wherein *ϕ̃_{eₘ}* denotes a learned proxy example embedding of the learned set ${\left\{{{ϕ}^{˜}}_{{e}_{m}}\right\}}_{m = 1}^{M}$ of proxy example embeddings, and *Wᵢₘ* denotes coefficients of the learned coefficient matrix.

5. The method of claim 4, further comprising, for *k* examples retrieved in response to an input query *q*, determining a proxy example embedding by concatenating the respective proxy example embeddings corresponding to the *k* examples as follows: ${{ϕ}^{˜}}_{e} : = {{ϕ}^{˜}}_{e}^{\left(1\right)} \left‖{{ϕ}^{˜}}_{e}^{\left(2\right)}\right‖ ⋯ \left‖{{ϕ}^{˜}}_{e}^{\left(k\right)}\right. ,$ wherein *ϕ̃ₑ* denotes the resulting proxy example embedding, ${{ϕ}^{˜}}_{e}^{\left(1\right)} , … , {{ϕ}^{˜}}_{e}^{\left(k\right)}$ denote the proxy examples embeddings of the retrieved *k* examples, and symbol ∥ denotes the concatenation operation.

6. The method of claim 4, further comprising, for *k* examples retrieved in response to an input query *q*, determining a proxy example embedding by aggregating the proxy example embeddings of the retrieved *k* examples as follows: ${{ϕ}^{˜}}_{e} = \frac{1}{k} {\sum }_{i = 1}^{k} {{ϕ}^{˜}}_{e}^{\left(i\right)} .$

7. The method of claim 6, wherein the learning of the set ${\left\{{{ϕ}^{˜}}_{{e}_{m}}\right\}}_{m = 1}^{M}$ of proxy example embeddings and of the coefficient matrix ${W}_{im} ∈ {ℝ}^{N \times M}$ is carried out by solving the following optimization problem: $\begin{matrix}{arg min}_{{\left\{{{ϕ}^{˜}}_{{e}_{m}}\right\}}_{m = 1}^{M} , W} \frac{1}{\left|ℚ\right|} {\sum }_{q ∈ ℚ} L \left(f\left({ϕ}_{R \left(q\right)}, {ϕ}_{q}\right),f\left(\frac{1}{k}{\sum }_{i = 1}^{k} {\sum }_{m = 1}^{M} {W}_{im} {{ϕ}^{˜}}_{{e}_{m}} , {ϕ}_{q}\right)\right) \\ + {\sum }_{m = 1}^{M} L \left(f\left({{ϕ}^{˜}}_{{e}_{m}}, {ϕ}_{{q}_{a}}\right),{e}^{˜}\right) .\end{matrix}$

8. A data processing apparatus (300) comprising means (310) configured to perform a method according to any one of claims 1 to 7.

9. A computer program comprising instructions which, when the program is executed by a computer (310), cause the computer (310) to perform a method (200) according to any one of claims 1 to 7.

10. Computer-readable storage medium (320) comprising instructions which, when executed by a computer (310), cause the computer (310) to carry out a method (200) according to any one of claims 1 to 7.
